# EUROPÄISCHE PATENTANMELDUNG

(11) **EP 1 591 009 A1**
(43) Veröffentlichungstag der Anmeldung: **02.11.2005**
(21) Anmeldenummer: 05009058.8
(22) Anmeldetag: 26.04.2005
(51) Int. Cl.: A01K 93/00

(54) **Schnellwechselpose**

(30) Priorität: 27.04.2004 DE 202004006590 U
(71) Anmelder: Franke, Hubert, 33178 Borchen (DE)
(72) Erfinder: Schimf, Georg, 33184 Altenbeken/Schwaney (DE)
(74) Vertreter: Hanewinkel, Lorenz

(57) **Zusammenfassung**

Die Erfindung Schnellwechselpose mit einem Posenkörper (10), mit einem durchgehenden Laufrohr (4) durch das ein Draht (11) verschieblich geführt ist, der an seinen Enden im unteren und oberen Posenbereich je eine offene Schlaufe (1, 8) zum Einhaken einer Angelschnur (5) trägt und durch eine Druckfeder (3) und ein Federbedienteil (2, 7) geführt ist, die im Verhältnis zur Drahtlänge so bemessen ist, daß die Schlaufen (1, 8) jeweils dann mit ihrem freien Schlaufenende sich in dem Posenkörper (10) befinden, wenn das Federbedienteil (2, 7) unbetätigt ist, und ansonsten sich außerhalb davon befinden, wobei die Schlaufe (1) im unteren Posenbereich eine Durchlauföse für die Angelschnur (5) ist, indem sie kreisförmig mit einem radial abstehenden Drahtende (12) ausgebildet ist, daß zur unteren Öffnung des Laufrohres (4) hin gerichtet, und die andere Schlaufe (8) U-förmig ausgebildet ist und jeweils durch die unbetätigte Feder (3) gezogen, die Angelschnur (5) am Posenkörper (10) festgelegt.

## Beschreibung

Die Erfindung betrifft eine Schnellwechselpose mit einem Posenkörper mit einem durchgehenden Laufrohr durch das ein Draht verschieblich geführt ist, der an seinen Enden im unteren und oberen Posenbereich je eine offene Schlaufe zum Einhaken einer Angelschnur trägt und durch eine Druckfeder und ein Federbedienteil geführt ist, die im Verhältnis zur Drahtlänge so messen ist, daß die Schlaufen jeweils dem mit ihrem freien Schlaufenende sich in dem Posenkörper befinden, wenn das Federbedienteil unbetätigt ist, und ansonsten sich außerhalb davon befinden.

Eine derartige Schnellwechselpose ist aus der DE 25 33 607 A1 bekannt. Bei dieser sind an beiden Drahtenden U-förmige Haken ausgebildet, die bei unbetätigter Feder so weit in die Laufrohröffnung gezogen werden, daß die Angelschnur sowohl unten wie oben am Posenkörper festgelegt ist. Diese Pose ist deshalb nicht als Durchlaufpose geeignet. Weiterhin sind beide Drahtenden parallel durch die Druckfeder gezogen, und am Federbedienteil mit einer Schlaufe gehalten, so daß beide Schlaufen bei einer Federbedienung gleichzeitig frei werden, was das Einhängen der Angelschnur erschwert.

Weiterhin ist aus der DE 92 03 546 U eine Pose, die eine Durchlauföse endseitig eines Stiftes trägt, bekannt, auf dem ein längskomprimierbarer Mantel verschieblich angeordnet ist, der von dem Posenkörper bis zur Durchlauföse reicht und eine Ösenöffnung verschließt, wenn er nicht zusammengeschoben ist.

Die Handhabung des schlauchartigen Mantels ist unpraktisch, und eine Festlegung der Angelschnur an der Pose ist nicht vorgesehen.

Weiterhin ist aus der DE 94 05 585 U1 eine Pose bekannt, an der die Angelschnur im oberen Bereich mit einem Schnurklemmkörper angesteckt wird und am unteren Ende eines Posenstiftes mit einer Rastbuchse eine Durchlauföse aufgesteckt wird, die auf die Angelschnur aufgefädelt ist und somit bei einem Posenwechsel dort verbleibt.

Beim Angeln gibt es verschiedene Situationen, die einen schnellen Wechsel von Lauf-. und Feststellposen und umgekehrt erforderlich machen. Der Umbau ist jedoch aufwendig und wird in der Regel dadurch umgangen, daß mit mehreren Angelruten mit voreingestellten Lauf- und Feststellposen geangelt wird.

Ein weiteres Problem ergibt sich beim Verpacken und Transport der Posen. Laufposen ohne Schnellwechselvorrichtung und Feststellposen können nur von der Angelschnur gelöst werden, in dem man die Angelschnur durchschneidet. Um das zu vermeiden, beläßt man häufig die Posen an den Angeln, was zum Teil zu Beschädigungen der Posen beim Transport führen kann.

Es ist Aufgabe der Erfindung, die eingangs bezeichnete Schnellwechselpose so zu verbessern, daß sie leichter bedienbar ist und als eine Lauf- und Feststellpose nutzbar ist.

Die Lösung, daß die Schlaufe im unteren Posenbereich eine Durchlauföse für die Angelschnur ist, indem sie kreisförmig mit einem radial abstehenden Drahtende ausgebildet ist, das zur unteren Öffnung des Laufrohres hin gerichtet, und die andere Schlaufe U-förmig ausgebildet ist und jeweils durch die unbetätigte Feder gezogen, die Angelschnur am Posenkörper festlegt.

Vorteilhafte Ausgestaltungen sind in den Unteransprüchen angegeben.

Zwecks einfacher Bedienung der Durchlauföse ist unten an einem Laufrohrabschnitt begrenzt verschieblich ein Bedienteilrohr gehalten, das innen eine Federkammer mit der Druckfeder enthält, die sich unten am Bedienteilrohr und oben an dem verschieblichen Laufrohrabschnitt abstützt. Wird das Bedienteilrohr hochgeschoben, wird das Drahtende der Durchläuföse frei, und die Öse ist geöffnet.

Unabhängig davon läßt sich die obere U-förmige Schlaufe des Drahtes bedienen, der durch den Laufrohrabschnitt und weiter durch einen Kanal im Posenkörper nach oben bis auf dessen Seite geführt ist. Dort ist endseitig in die Schlaufe ein Bremskörper, vorzugsweise aus Gummi, angebracht ist, der mit einem Griffknopf versehen ist. Eine Angelschnur wird durch den Bremskörper, der von der Feder zur Posenöffnung gezogen wird, festgelegt- Wird der Bremskörper abgezogen, so wird die Feder komprimiert; die Angelschnur ist dann frei verschieblich und kann, wenn die Schlaufe ganz herausgezogen ist, ein- und ausgehängt werden.

Mit der im Schutzanspruch aufgeführten Lauf- und Feststellpose mit integrierter Schnellwechsel- und Schnelleinhakposenhaltervorrichtung wird erreicht, da eine einzige Angelpose wechselweise als Lauf- und Feststellpose verwendbar ist.

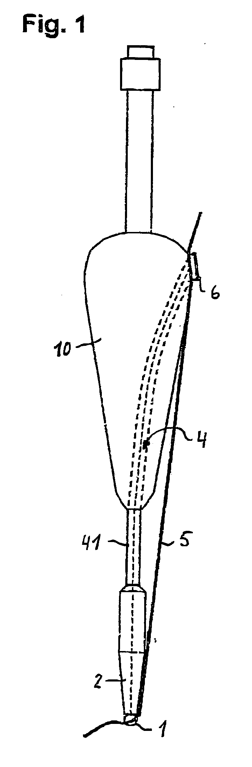

Vorteilhafte Ausgestaltungen sind in den Figuren 1 bis 5 dargestellt:
- Fig. 1: zeigt eine Seitenansicht der Pose,
- Fig. 2: zeigt das untere Bedienteil in der Schließstellung vergrößert,
- Fig. 3: zeigt die Öffnungsstellung zu Fig. 2
- Fig. 4: zeigt das obere Bedienteil in der Schließstellung,
- Fig. 5: zeigt die Öffnungsstellung zu Fig. 4.

Die Pose besteht aus einem Posenkörper 10 mit dem oberen Signalfortsatz, einem nach unten gerichteten Laufrohrabschnitt 41, an dem unten ein verschiebliches Bedienteilrohr 40 gehalten ist, aus dessen unterer Öffnung eine als eine Durchlauföse ausgebildete Drahtschlaufe 1 ragt. Der Draht 11 durchsetzt das aus den drei genannten Teilen bestehende Laufrohr 4 und tritt oben seitlich aus dem Posenkörper 10 aus, wo es mit einem Bremskörper 6 besetzt ist. Die Angelschnur 5 verläuft unter diesem und durch die Durchlauföse 1.

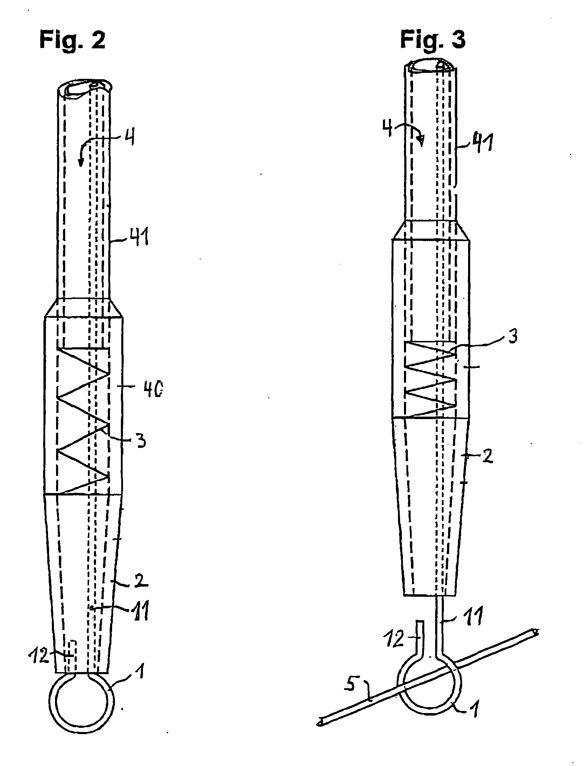

Fig. 2 verdeutlicht vergrößert den Aufbau des unteren Funktionsbereichs der Pose, und Fig. 3 zeigt die betätigte Stellung des Federbedienteils 2. Dieses enthält eine axiale Laufbohrung 4, die sich in dem Laufrohrabschnitt 41 fortsetzt und von dem Draht 11 durchsetzt. In dem Bedienteilrohr 40 befindet sich eine axiale Federkammer 42 mit einer eingelegten Druckfeder 3, die sich an der unteren Kammerwand abstützt und oben gegen das Ende des verschieblich geführten Laufrohrabschnitts drückt, so daß es an einem inneren Anschlag anliegt. Im nicht bedienten Zustand ist die Feder 3 weitgehend gedehnt, so daß die untere Schlaufe 1 an der Laufrohröffnung anschlägt. Da die Öse 1 etwa breitförmig ausgeformt ist, und ein radial abstehendes Drahtende 12 etwa parallel zum Draht 11 aufweist, ist auch das Drahtende 12 in die Laufohröffnung eingezogen und die Öse 1 geschlossen.

Zum öffnen der Öse 1 wird das Federbedienteil 2 nach oben geschoben und so das Drahtende 12 freigelegt, so daß eine Angelschnur ein- und ausgeführt werden kann, wie Fig. 3 zeigt.

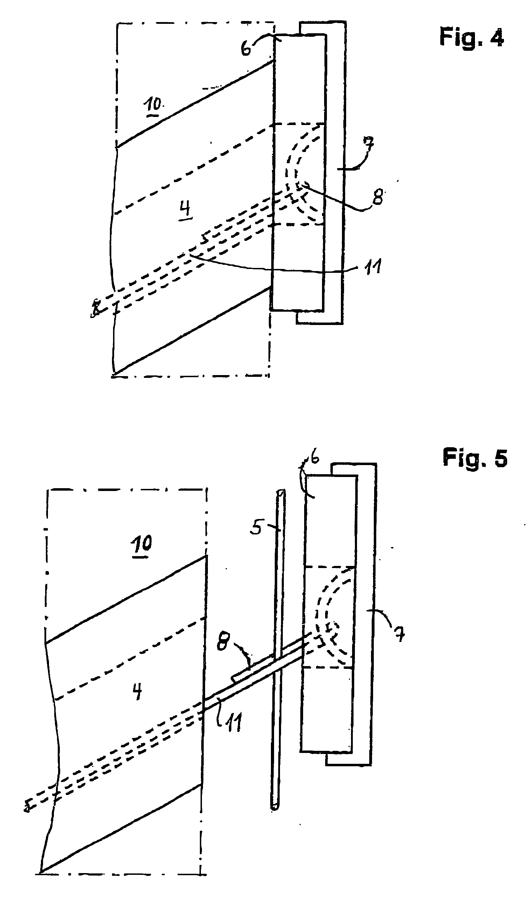

Fig. 4 zeigt stark vergrößert einen Ausschnitt des Posenkörpers 10 am Ausgang des Laufrohres 4. Der Draht 11 ist mit einer U-förmigen Schlaufe 8 in einem Bügel eines Federbedienteils 7 eingehakt, das auf einem als Gummischeibe ausgebildetem Bremskörper 6 angeordnet ist. Die Zugkraft, die die Feder auf den Draht 11 ausübt, drückt den Bremskörper 6 an den Posenkörper 10.

Fig. 4 zeigt dazu den Zustand des Federbedienteiles 7, wenn es vom Posenkörper 10 weggezogen ist. Dadurch ist die U-förmige Schlaufe 8 aus diesem ganz ausgetreten, so daß die Angelschnur 5 eingehakt werden kann. Wird das Bedienteil wieder losgelassen, wird die Angelschnur angedrückt und am Verrutschen gehindert.

Beide Drahtschlaufen 1, 8 sind mit separat bedienbar, obwohl nur eine Feder 3 vorhanden ist.

### Bezugszeichenliste

- 1: untere Schlaiife - Öse
- 10: Posenkörper
- 11: Draht
- 12: Drahtende an 1
- 2: Federbedienteil
- 3: Druckfeder
- 4: Laufrohr
- 40: Bedienteilrohr
- 41: Laufrohrabschnitt
- 42: Federkammer
- 5: Angeleschnur
- 6: Bremskörper, Gummischeibe
- 7: Federbedienteil-Bedienknopf
- 8: obere Schlaufe U-förmig

## Patentansprüche

1. Schnellwechselpose mit einem Posenkörper (10), mit einem durchgehenden Laufrohr (4) durch das ein Draht (11) verschieblich geführt ist, der an seinen Enden im unteren und oberen Posenbereich je eine offene Schlaufe (1, 8) zum Einhaken einer Angelschnur (5) trägt und durch eine Druckfeder (3) und ein Federbedienteil (2, 7) geführt ist, die im Verhältnis zur Drahtlänge so bemessen ist, daß die Schlaufen (1, 8) jeweils dann mit ihrem freien Schlaufenende sich in dem Posenkörper (10) befinden, wenn das Federbedienteil (2, 7) unbetätigt ist, und ansonsten sich außerhalb davon befinden,
**dadurch gekennzeichnet, daß** die Schlaufe (1) im unteren Posenbereich eine Durchlauföse für die Angelschnur (5) ist, indem sie kreisförmig mit einem radial abstehenden Drahtende (12) ausgebildet ist, daß zur unteren Öffnung des Laufrohres (4) hin gerichtet, und die andere Schlaufe (8) U-förmig ausgebildet ist und jeweils durch die unbetätigte Feder (3) gezogen, die Angelschnur (5) am Posenkörper (10) festgelegt.

2. Schnellwechselpose nach Anspruch 1, **dadurch gekennzeichnet, daß** um das Laufrohr (4) aus einem unteren Bedienteil (2) und einem darin beschränkt geführten oberen Laufrohrabschnitt (41) besteht und in dem Bedienteil (40) eine Federkammer (42) ausgebildet ist, in der die Druckfeder (3) untenendig abgestützt ist, die obenendig auf dem Laufrohrabschnitt (41) drückt.

3. Schnellwechselpose nach Anspruch 1 oder 2, **dadurch gekennzeichnet, daß** der Laufrohrabschnitt (41^) nach oben in den dickeren Posenkörper (10) übergeht und seitlich an diesem das Laufrohr (4) endet, wo die U-förmige Schlaufe (8) endet.

4. Schnellwechselpose nach Anspruch 3, **dadurch gekennzeichnet, daß** in die U-förmige Schlaufe (8) ein handhabbarer Bremskörper (6) eingehängt ist, so daß eine in die Schlaufe (8) eingelegte Angelschnur zwischen den Posenkörper (10) und dem Bremskörper (6) durch die Kraft der Feder (3) gebremst gehalten ist, außer wenn der Bremskörper (6) von dem Posenkörper (10) weggezogen wird.

5. Schnellwechselpose nach Anspruch 4, **dadurch gekennzeichnet, daß** der Bremskörper (6) eine Gummischeibe oder Kunststoffscheibe ist.

6. Schnellwechselpose nach Anspruch 4 oder 5, **dadurch gekennzeichnet, daß** der Bremskörper (10) einen Bedienknopf (7), eine Schlaufe o. dgl., trägt.
